# EUROPEAN PATENT APPLICATION

(11) **EP 4 625 442 A1**
(43) Date of publication of application: **01.10.2025**
(21) Application number: 23894471.4
(22) Date of filing: 13.11.2023
(51) Int. Cl.: H01B 13/00, C01B 25/14, H01M 10/052, H01M 10/0562

(54) **MANUFACTURING METHOD FOR SULFIDE SOLID ELECTROLYTE, AND MANUFACTURING DEVICE FOR SULFIDE SOLID ELECTROLYTE**

(30) Priority: 24.11.2022 JP 2022187379
(71) Applicant: AGC INC., Chiyoda-ku, Tokyo 1008405 (JP)
(72) Inventor: OMORI Norifumi, Tokyo 100-8405 (JP)
(74) Representative: Müller-Boré & Partner Patentanwälte PartG mbB
(86) International application number: PCT/JP2023/040835
(87) International publication number: WO 2024/111462

(57) **Abstract**

A manufacturing method for a sulfide solid electrolyte in which a sulfide solid electrolyte material is supplied into a heat-treating furnace and heated, the heat-treating furnace comprising a heating unit that heats the sulfide electrolyte material, a rotating member that penetrates the heating unit, and a pressure chamber that is provided to a sliding portion of the rotating member, and the sulfide solid electrolyte material being heated while the pressure of the pressure chamber is controlled to be higher than the pressure of the heating unit and atmospheric pressure.

## Description

### TECHNICAL FIELD

The present invention relates to a method for producing a sulfide solid electrolyte and an apparatus for producing a sulfide solid electrolyte.

### BACKGROUND ART

Lithium-ion secondary batteries are widely used for a portable electronic device such as a mobile phone and a notebook computer. In the related art, a liquid electrolyte has been used in a lithium-ion secondary battery. On the other hand, attention has been paid to an all-solid-state lithium-ion secondary battery in which a solid electrolyte is used as an electrolyte of a lithium-ion secondary battery in recent years, from the viewpoint of improving safety, charging and discharging at a high speed, and reducing the size of a case.

Examples of the solid electrolyte used in the all-solid-state lithium-ion secondary battery include a sulfide solid electrolyte.

Examples of a method for synthesizing a sulfide solid electrolyte include a method of mechanically milling a sulfide solid electrolyte raw material, and a method in which a sulfide solid electrolyte raw material is heated and melted to prepare a melt, and the melt is cooled and solidified. However, the obtained sulfide solid electrolyte has an unstable crystal structure, or sulfur as an impurity adheres to a surface of the sulfide solid electrolyte or the like, so that performance as a solid electrolyte for a secondary battery becomes insufficient. Therefore, in order to improve the battery performance of the solid electrolyte, a heat treatment or the like is further performed.

For example, Patent Literature 1 discloses a sulfide solid electrolyte method in which sulfide glass obtained by amorphizing a raw material composition by mechanical milling or the like is heated while being rotated and fluidized under atmospheric pressure and reduced pressure less than atmospheric pressure to crystallize the sulfide glass and remove elemental sulfur mixed as an impurity in the sulfide glass.

Patent Literature 2 discloses a method for producing a sulfide solid electrolyte fine particle, in which a coarse-grained material such as sulfide glass obtained by amorphizing a raw material composition by mechanical milling or the like is pulverized into a fine-grained material, and the fine-grained material is heat-treated and crystallized while being physically stimulated.

On the other hand, when the heat treatment is performed using a heat treatment apparatus, it is necessary to prevent by-products and the like generated by the heat treatment from adhering to an inside of the heat treatment apparatus and to prevent operation of the heat treatment apparatus from being hindered. In particular, when continuous processing is performed for the purpose of mass production, the heat treatment apparatus often includes a rotating member capable of conveying a processing material while heating the processing material. In this case, it is necessary to prevent the hindrance of the rotation of the rotating member due to the adhesion of by-products at a portion where driving of the rotating member can be hindered by the adhesion of the by-products, that is, at a boundary portion between the rotating member and a fixed member in the heat treatment apparatus.

As a method for preventing the adhesion of the by-products and the like to the heat treatment apparatus, for example, Patent Literature 3 discloses a method for continuously producing lithium sulfide by reacting a lithium raw material with a hydrogen sulfide gas, in which a hydrogen sulfide gas is supplied into a reaction tank from upstream to downstream along a moving direction of the lithium raw material and from a position downstream of a position where the lithium raw material is supplied into the reaction tank, thereby preventing adhesion of the lithium raw material that has absorbed water as a reaction by-product to a raw material hopper, a raw material supply pipe, or the like.

### CITATION LIST

### PATENT LITERATURE

Patent Literature 1: JP7035772B
Patent Literature 2: JP6946791B
Patent Literature 3: JP6718774B

### SUMMARY OF INVENTION

### TECHNICAL PROBLEM

Patent Literatures 1 and 2 disclose that a sulfide solid electrolyte material obtained by the mechanical milling is crystallized by the heat treatment to remove elemental sulfur as the impurity, but do not describe a method for preventing adhesion of the removed sulfur to a production apparatus.

Patent Literature 3 does not disclose a heat treatment method of an electrolyte or a method for preventing adhesion. Further, a method for injecting a gas into a reaction tank as disclosed in Patent Literature 3 is effective in preventing adhesion immediately below the injected gas, but in a peripheral portion thereof, surrounding atmosphere is drawn in, making it difficult to stably prevent the adhesion. Further, there is no mention of preventing rotation hindrance of the rotating member caused by the adhesion of the by-product described above.

Therefore, an object of the present invention is, in a method for producing a sulfide solid electrolyte including heating and conveying a sulfide solid electrolyte material using a heat treatment apparatus including a rotating member, to provide a method for producing a sulfide solid electrolyte and an apparatus for producing the same which can prevent adhesion of sulfur to the heat treatment apparatus, particularly to a boundary portion between the rotating member and a fixed member, and can stably produce a sulfide solid electrolyte having excellent battery performance.

### SOLUTION TO PROBLEM

As a result of intensive studies, the present inventors have found that, in a method for producing a sulfide solid electrolyte including heating and conveying a sulfide solid electrolyte material using a heat treatment apparatus including a rotating member, the above-described problems can be solved by providing a pressurizing chamber that pressurizes a boundary portion between the rotating member and a fixed member, and heat-treating the sulfide solid electrolyte material while controlling a pressure in the pressurizing chamber to be higher than a pressure in a heating portion or outside air, and have completed the present invention.

That is, the present invention relates to the following [1] to [8].
[1] A method for producing a sulfide solid electrolyte including:
   supplying a sulfide solid electrolyte material to a heat treatment apparatus; and
   heat-treating the sulfide solid electrolyte material,
   in which the heat treatment apparatus includes: a heating portion configured to heat-treat the sulfide solid electrolyte material; a rotating member configured to convey the sulfide solid electrolyte material while heating the sulfide solid electrolyte material by the heating portion; a stationary fixed member that is disposed on an end portion side in an axial direction of the rotating member; and a pressurizing chamber configured to pressurize a boundary portion between the rotating member and the fixed member, and
   the sulfide solid electrolyte material is heat-treated while controlling a pressure in the pressurizing chamber to a pressure higher than a pressure in the heating portion and an outside air pressure.
[2] The method for producing a sulfide solid electrolyte according to [1], in which the sulfide solid electrolyte material is obtained by mechanically milling or heating and melting a sulfide solid electrolyte raw material.
[3] The method for producing a sulfide solid electrolyte according to [1] or [2], in which an oxygen gas concentration in the pressurizing chamber is 10 ppm by volume or more.
[4] The method for producing a sulfide solid electrolyte according to [1] or [2], in which a heating temperature in the heating portion is 300°C or higher.
[5] The method for producing a sulfide solid electrolyte according to [1] or [2], in which a pressure difference between the pressure in the pressurizing chamber and each of the pressure in the heating portion and the outside air pressure is 0.1 kPa or more.
[6] The method for producing a sulfide solid electrolyte according to [1] or [2], in which the sulfide solid electrolyte material is continuously supplied and heat-treated.
[7] An apparatus for producing a sulfide solid electrolyte, the apparatus including:
   a heating portion configured to heat-treat a sulfide solid electrolyte material;
   a rotating member configured to convey the sulfide solid electrolyte material while heating the sulfide solid electrolyte material by the heating portion;
   a stationary fixed member that is disposed on an end portion side in an axial direction of the rotating member; and
   a pressurizing chamber configured to pressurize a boundary portion between the rotating member and the fixed member.
[8] The apparatus for producing a sulfide solid electrolyte according to [7], the apparatus further including an oxygen gas supply portion configured to supply an oxygen gas to the pressurizing chamber.

### ADVANTAGEOUS EFFECTS OF INVENTION

According to the present invention, in a method for producing a sulfide solid electrolyte which includes supplying a sulfide solid electrolyte material to a heat treatment apparatus and performing a heat treatment, the heat treatment apparatus includes a heating portion configured to heat-treat the sulfide solid electrolyte material, a rotating member configured to convey the sulfide solid electrolyte material while heating the sulfide solid electrolyte material by the heating portion, a stationary fixed member that is disposed on an end portion side in an axial direction of the rotating member, and a pressurizing chamber configured to pressurizes a boundary portion between the rotating member and the fixed member, and the sulfide solid electrolyte material is subjected to the heat treatment while controlling a pressure in the pressurizing chamber to be higher than a pressure in the heating portion or outside air, so that it is possible to prevent adhesion of sulfur to the boundary portion at which rotation of the rotating member can be hindered due to the adhesion of sulfur while preventing a gas that hinders production from flowing into the heating portion. Accordingly, it is possible to provide a method and an apparatus for producing a sulfide solid electrolyte capable of stably producing a sulfide solid electrolyte having excellent battery performance.

### BRIEF DESCRIPTION OF DRAWINGS

FIG. 1 is an example of a flowchart of a method for producing a sulfide solid electrolyte according to an embodiment of the present invention.
FIG. 2 is a schematic side cross-sectional view showing an example of an apparatus for producing a sulfide solid electrolyte according to a first embodiment of the present invention.
FIG. 3 is a schematic top cross-sectional view showing an example of a heating portion and a peripheral portion thereof in the apparatus for producing a sulfide solid electrolyte according to the first embodiment of the present invention.
FIG. 4 is a schematic top cross-sectional view showing another example of the heating portion and the peripheral portion thereof in the apparatus for producing a sulfide solid electrolyte according to the first embodiment of the present invention.
FIG. 5 is a schematic top cross-sectional view showing another example of the heating portion and the peripheral portion thereof in the apparatus for producing a sulfide solid electrolyte according to the first embodiment of the present invention.
FIG. 6 is a schematic top cross-sectional view showing an example of a sliding portion of a rotating member and a pressurizing chamber in the apparatus for producing a sulfide solid electrolyte according to the first embodiment of the present invention.
FIG. 7 is a schematic side cross-sectional view showing an example of an apparatus for producing a sulfide solid electrolyte according to a second embodiment of the present invention.
FIG. 8 is a schematic side cross-sectional view showing an example of a sliding portion of a rotating member and a pressurizing chamber in the apparatus for producing a sulfide solid electrolyte according to the second embodiment of the present invention.
FIG. 9 is a schematic side cross-sectional view showing an example of an apparatus for producing a sulfide solid electrolyte according to a third embodiment of the present invention.
FIG. 10 is a schematic side cross-sectional view showing an example of a sliding portion of a rotating member and a pressurizing chamber in the apparatus for producing a sulfide solid electrolyte according to the third embodiment of the present invention.

### DESCRIPTION OF EMBODIMENTS

Hereinafter, the present invention is described in detail, but the present invention is not limited to the following embodiments, and can be freely modified and implemented without departing from the gist of the present invention. The expression "to" indicating a numerical range is used to include numerical values written before and after it as a lower limit value and an upper limit value. In the following drawings, members and portions having the same functions may be denoted by the same reference numerals, and duplicate descriptions may be omitted or simplified. Embodiments described in the drawings are schematically for the purpose of clearly illustrating the present invention, and do not necessarily accurately represent a size or a scale of an actual apparatus.

### (Method for Producing Sulfide Solid Electrolyte)

A method for producing a sulfide solid electrolyte according to an embodiment of the present invention (hereinafter, also referred to as the present production method) is a method for producing a sulfide solid electrolyte which includes supplying a sulfide solid electrolyte material to a heat treatment apparatus and heat-treating the sulfide solid electrolyte material, the heat treatment apparatus includes a heating portion configured to heat-treat the sulfide solid electrolyte material, a rotating member configured to convey the sulfide solid electrolyte material while heating the sulfide solid electrolyte material by the heating portion, a stationary fixed member that is disposed on an end portion side in an axial direction of the rotating member, and a pressurizing chamber that pressurizes a boundary portion between the rotating member and the fixed member, and the sulfide solid electrolyte material is heat-treated while controlling a pressure in the pressurizing chamber to a pressure higher than a pressure in the heating portion and an outside air pressure.

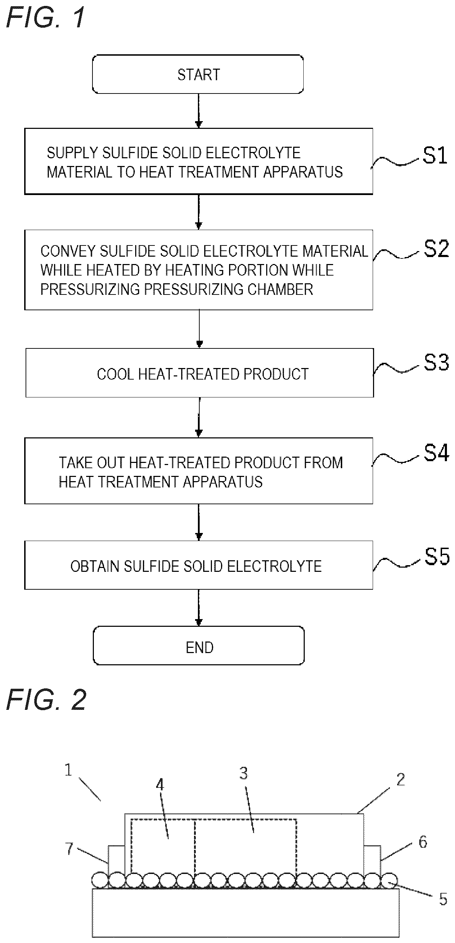

FIG. 1 shows an example of a flowchart of the present production method. In the present production method, first, the sulfide solid electrolyte material is supplied to the heat treatment apparatus (step S1), the sulfide solid electrolyte material is conveyed and heat-treated by the heating portion while pressurizing the pressurizing chamber (step S2), a heat-treated product is cooled (step S3), the heat-treated product is taken out from the heat treatment apparatus (step S4), and the sulfide solid electrolyte is obtained (step S5).

Here, step S3 may be performed after step S4. That is, the sulfide solid electrolyte material is supplied to the heat treatment apparatus, the sulfide solid electrolyte material is heat-treated in the heating portion, and the heat-treated product may be taken out from the heat treatment apparatus and then cooled to obtain the sulfide solid electrolyte.

As described below, it is preferable that steps S1 to S5 are performed continuously, and when this continuous production method is adopted, the effect of the present invention is further enhanced.

### <Sulfide Solid Electrolyte Material>

In the present production method, the sulfide solid electrolyte material (hereinafter, may be referred to as the present material) refers to a material from which a desired sulfide solid electrolyte is obtained by a heat treatment at a predetermined temperature, and examples thereof include a crude sulfide solid electrolyte which contains sulfur as an impurity on a surface thereof, and in which sulfur is removed as a gas or the like by a heat treatment and a crystal structure is homogenized. That is, the present material is a precursor of the sulfide solid electrolyte to be finally obtained before the heat treatment. The present material is distinguished from a sulfide solid electrolyte raw material to be described later. When the present material is a sulfide solid electrolyte containing sulfur as an impurity adhering to a surface thereof, excess sulfur on the surface that hinders battery performance can be removed as a gas by the heat treatment, and the battery performance when used as a solid electrolyte of a secondary battery can be improved.

The sulfide solid electrolyte material may be amorphous or may include an amorphous phase. In the present material in which a crystal structure is not stable, since the crystal structure is homogenized by the heat treatment and ionic conductivity can be increased, the battery performance when used as the solid electrolyte of the secondary battery can be improved.

In the present production method, as the sulfide solid electrolyte material, a commercially available sulfide solid electrolyte material may be used, or a material produced from the sulfide solid electrolyte raw material may be used.

The sulfide solid electrolyte material is preferably obtained by mechanically milling or heating and melting the sulfide solid electrolyte raw material.

### (Sulfide Solid Electrolyte Raw Material)

The sulfide solid electrolyte raw material (hereinafter, may be referred to as the present raw material) means a constituent raw material of a sulfide solid electrolyte for obtaining a desired sulfide solid electrolyte, and a plurality of types of the present raw materials are generally mixed and used. The sulfide solid electrolyte raw material is distinguished from the sulfide solid electrolyte material described above. Various raw materials can be used as the present raw material.

As the present raw material, a commercially available sulfide solid electrolyte raw material may be used, or a sulfide solid electrolyte raw material produced from a material may be used. These sulfide solid electrolyte raw materials may be further subjected to a known pretreatment.

The sulfide solid electrolyte raw material is specifically described below. The sulfide solid electrolyte raw material usually contains an alkali metal element (R) and a sulfur element (S).

Examples of the alkali metal element (R) include lithium element (Li), sodium element (Na), and potassium element (K), and among these elements, the lithium element (Li) is preferable. As the alkali metal element (R), substances (components) containing an alkali metal element such as elemental alkali metal element and compounds containing an alkali metal element can be appropriately combined and used. Here, as the lithium element, Li-containing substances (components), such as elemental Li and Li-containing compounds, can be appropriately combined and used.

Examples of a substance containing the lithium element (Li) include lithium compounds such as lithium sulfide (Li₂S), lithium iodide (LiI), lithium carbonate (Li₂CO₃), lithium sulfate (Li₂SO₄), lithium oxide (Li₂O), and lithium hydroxide (LiOH), and metallic lithium. As the substance containing the lithium element (Li), from the viewpoint of obtaining a sulfide material, it is preferable to use lithium sulfide.

As the sulfur element (S), S-containing substances (components), such as elemental S and S-containing compounds, can be appropriately combined and used.

Examples of a substance containing the sulfur element (S) include phosphorus sulfides such as phosphorus trisulfide (P₂S₃) and phosphorus pentasulfide (P₂S₅), other sulfur compounds containing phosphorus, elemental sulfur, and a compound containing sulfur.

Examples of the compound containing sulfur include H₂S, CS₂, iron sulfides (such as FeS, Fe₂S₃, FeS₂, Fe₁₋ₓS), bismuth sulfide (Bi₂S₃), and copper sulfides (such as CuS, Cu₂S, Cu₁₋ₓS).

From the viewpoint of obtaining a sulfide material, the substance containing the sulfur element (S) is preferably phosphorus sulfide, and more preferably phosphorus pentasulfide (P₂S₅).

These substances may be used alone or in combination of two or more kinds thereof. Phosphorus sulfide can be considered as a compound that serves as both the S-containing substance and a P-containing substance, which is described later.

From the viewpoint of improving the ionic conductivity and the like of the obtained sulfide solid electrolyte, it is preferable that the present raw material further contains a phosphorus element (P). As the phosphorus element (P), P-containing substances (components), such as elemental P and P-containing compounds, can be appropriately combined and used.

Examples of a substance containing the phosphorus element (P) include phosphorus sulfides such as phosphorus trisulfide (P₂S₃) and phosphorus pentasulfide (P₂S₅), phosphorus compounds such as sodium phosphate (Na₃PO₄), and elemental phosphorus.

As the substance containing the phosphorus element (P), from the viewpoint of exerting the effect of the present invention more effectively, phosphorus sulfide having high volatility is preferable, and phosphorus pentasulfide (P₂S₅) is more preferable. These substances may be used alone or in combination of two or more kinds thereof.

The present raw material may be obtained as a mixed raw material by, for example, appropriately mixing the above-mentioned substances according to a composition of the desired sulfide solid electrolyte. A mixing ratio is not particularly limited, but for example, a molar ratio S/R of the sulfur element (S) to the alkali metal element (R) in the present raw material is preferably 0.65/0.35 or less, and more preferably 0.5/0.5 or less, from the viewpoint of improving the ionic conductivity and the like of the obtained sulfide solid electrolyte. The mixed raw material is preferably obtained by mixing the raw materials in a predetermined stoichiometric mixture ratio according to the materials used for the mixing.

Examples of a mixing method include mixing in a mortar, mixing using a medium such as a planetary ball mill, and medium-less mixing such as a pin mill, a powder stirrer, and air flow mixing.

Examples of a preferred combination of the alkali metal element and the sulfur element contained in the present raw material include a combination of Li₂S and P₂S₅. When Li₂S and P₂S₅ are combined, a molar ratio Li/P of Li to P is preferably 40/60 or more, and more preferably 50/50 or more. The molar ratio Li/P of Li to P, is preferably 88/12 or less. The molar ratio Li/P of Li to P is preferably from 40/60 to 88/12, and more preferably from 50/50 to 88/12. By adjusting the mixing ratio so that an amount of P₂S₅ is relatively smaller than Li₂S, it becomes easier to prevent volatilization of sulfur and phosphorus components during the heat treatment due to a smaller boiling point of P₂S₅ compared to a melting point of Li₂S.

On the other hand, since lithium sulfide is expensive, a lithium compound other than lithium sulfide, metallic lithium, or the like may be used from the viewpoint of reducing a production cost of the sulfide solid electrolyte. Specifically, in this case, the present raw material preferably contains one or more selected from the group consisting of metallic lithium, lithium iodide (LiI), lithium carbonate (Li₂CO₃), lithium sulfate (Li₂SO₄), lithium oxide (Li₂O), and lithium hydroxide (LiOH) as the Li-containing substance. These substances may be used alone or in combination of two or more kinds thereof.

The present raw material may contain further substances (compounds and the like) in addition to the above substances depending on the composition of the desired sulfide solid electrolyte or as additives or the like.

For example, when producing a sulfide solid electrolyte containing a halogen element such as F, Cl, Br or I, the present raw material preferably contains a halogen element (Ha). In this case, the present raw material preferably contains a compound containing a halogen element.

Examples of the compound containing a halogen element include lithium halides such as lithium fluoride (LiF), lithium chloride (LiCl), lithium bromide (LiBr), and lithium iodide (LiI), phosphorus halides, phosphoryl halides, sulfur halides, sodium halides, and boron halides. As the compound containing a halogen element, lithium halides are preferable, and LiCl, LiBr, and LiI are more preferable, from the viewpoint of reactivity of the raw material. These compounds may be used alone or in combination of two or more kinds thereof.

An alkali metal halide such as lithium halides is also a compound containing an alkali metal element such as Li. When the present raw material contains an alkali metal halide, a part or all of the alkali metal element such as Li in the present raw material may be derived from the alkali metal halide such as lithium halides.

When the present raw material contains the halogen element (Ha) and the phosphorus element (P), a molar equivalent of Ha relative to P in the present raw material is preferably 0.2 molar equivalents or more, and more preferably 0.5 molar equivalents or more, from the viewpoint of improving the ionic conductivity and the like of the obtained sulfide solid electrolyte. From the viewpoint of stability of the obtained sulfide solid electrolyte, the molar equivalent of Ha is preferably 4 molar equivalents or less, and more preferably 3 molar equivalents or less.

When the sulfide solid electrolyte material obtained from the present raw material is amorphous, the present raw material preferably contains a sulfide such as SiS₂, B₂S₃, GeS₂, and Al₂S₃ from the viewpoint of improving the ease of generation of an amorphous phase. By facilitating the generation of the amorphous phase, when the amorphous substance is obtained by rapid cooling, the amorphous sulfide solid electrolyte material can be obtained even when a cooling rate is reduced, thereby reducing a load on an apparatus.

From the viewpoint of imparting moisture resistance to the sulfide solid electrolyte, it is also preferable that oxides such as SiO₂, B₂O₃, GeO₂, Al₂O₃, P₂O₅ are contained. These compounds may be used alone or in combination of two or more kinds thereof.

The sulfide or oxide may be contained in the present raw material, or may be separately added when the present raw material is heated and melted in the case where the sulfide solid electrolyte material is prepared by heating and melting. An addition amount of the sulfides or oxides is preferably 0.1 mass% or more, and more preferably 0.5 mass% or more with respect to a total amount of the raw material. The addition amount of the sulfides or oxides is preferably 50 mass% or less, and more preferably 40 mass% or less.

When the sulfide solid electrolyte material obtained from the present raw material contains a crystal layer, the present raw material may contain a compound serving as a crystal nucleus such as an oxide, an oxynitride, a nitride, a carbide, another chalcogen compound, or a halide.

### (Mechanical Milling)

The sulfide solid electrolyte material may be obtained by mechanically milling the sulfide solid electrolyte raw material described above.

The mechanical milling is not particularly limited as long as the mechanical milling is a method of mixing the sulfide solid electrolyte raw material while applying mechanical energy, and examples thereof include a planetary mill, a ball mill, a vibration mill, a turbo mill, mechano-fusion, and a disk mill.

Treatment conditions of the mechanical milling may be set such that the desired sulfide solid electrolyte material can be obtained. For example, when a planetary ball mill is used, the sulfide solid electrolyte raw material and crushing balls are added to a container, and the treatment is performed at a predetermined rotation speed for a predetermined time. In general, as the rotation speed increases, a generation rate of the sulfide solid electrolyte material increases, and as a treatment time increases, a conversion ratio from the sulfide solid electrolyte raw material to the sulfide solid electrolyte material increases.

A rotation speed of a plate of the planetary ball mill is preferably, for example, 200 rpm or more and 500 rpm or less. The treatment time in the planetary ball mill is, for example, 1 hour or more and 100 hours or less, and preferably 1 hour or more and 50 hours or less.

Materials and sizes of the container and the crushing balls used in the ball mill are not particularly limited, and known ones in the related art can be used. Examples of the material include alumina, zirconia, glass, and silicon nitride. A diameter of the crushing balls is, for example, 1 mm or more and 20 mm or less.

The mechanical milling may be dry mechanical milling or wet mechanical milling. A liquid used in the wet mechanical milling preferably has a property of not generating hydrogen sulfide in the reaction with the sulfide solid electrolyte raw material. After the mechanical milling, the sulfide solid electrolyte material is preferably dried. Examples of a drying method include a drying method using a hot plate.

### (Heating and Melting)

The sulfide solid electrolyte material may be obtained by heating and melting the sulfide solid electrolyte raw material described above.

In the heating and melting method, first, the sulfide solid electrolyte raw material is heated to a temperature at which the sulfide solid electrolyte raw material melts to obtain a melt, and the obtained melt is cooled and solidified to obtain the sulfide solid electrolyte material.

### -Heat and Melt Sulfide Solid Electrolyte Raw Material

The heating and melting of the sulfide solid electrolyte raw material is preferably performed in a gas atmosphere containing a sulfur element. The present raw material is heated and melted in the gas atmosphere containing the sulfur element, whereby sulfur is introduced into the melt. Accordingly, since the volatilization of sulfur during the heating can be prevented, the composition of the obtained sulfide solid electrolyte material can be appropriately controlled. The gas containing the sulfur element is, for example, a gas containing a compound containing the sulfur element or elemental sulfur, such as a sulfur gas, a hydrogen sulfide gas, and a carbon disulfide gas.

A temperature for heating and melting is not particularly limited, but from the viewpoint of homogenizing the melt in a short time, the temperature is preferably 600°C or higher, more preferably 630°C or higher, and still more preferably 650°C or higher. The temperature for heating and melting is preferably 1,000°C or lower, more preferably 950°C or lower, still more preferably lower than 900°C, and particularly preferably lower than 800°C, from the viewpoint of preventing deterioration or decomposition due to heating of the components in the melt. The temperature for the heating and melting is preferably 600°C or higher and lower than 900°C.

A time for heating and melting the raw material to obtain the melt is not particularly limited, but may be, for example, 0.5 hours or more, 1 hour or more, or 2 hours or more. As long as the deterioration and decomposition of the components in the melt caused by the heating is tolerable, the time for heating and melting may be long. A practical range of the time for heating and melting is preferably 100 hours or less, more preferably 50 hours or less, and still more preferably 25 hours or less.

A pressure during the heating and melting is not particularly limited, but for example, a normal pressure or a slight pressure is preferred, and normal pressure is more preferred.

From the viewpoint of preventing side reactions with water vapor, oxygen, and the like during the heating and melting, a dew point in a furnace is preferably -20°C or lower. The lower limit is not particularly limited, and is generally -80°C or more. An oxygen concentration is preferably 1,000 ppm by volume or less.

### -Cooling of Melt

Subsequently, the obtained melt is cooled and solidified to obtain the sulfide solid electrolyte material.

The cooling may be performed by a known method, and the method is not particularly limited. Examples of a more specific cooling method include a method in which the melt is poured onto a plate-like body made of carbon or the like and then cooled, a method in which the melt is poured into a narrow gap to be formed into a thin shape, such as a twin roll process, and a gas atomizing method.

When the melt is poured onto a plate-like body and then cooled, it is preferable that a thickness of the melt after being poured and a thickness of the resulting solid are relatively thin, from the viewpoint of improving cooling efficiency. Specifically, the thickness is preferably 10 mm or less, and more preferably 5 mm or less. A lower limit of the thickness is not particularly limited, but may be 0.01 mm or more, or may be 0.02 mm or more.

When the melt is poured into a narrow gap to be formed into a thin shape, the cooling efficiency is excellent, and a solid in a flake form, fiber form, or powder form can be obtained. The obtained solid can be obtained in any shape by being crushed into pieces of a size that is easy to handle. Among these shapes, a solid in a shape of a block is preferred since it is easier to recover. The "block" also includes a plate-like, flake-like, and fiber-like shapes.

In the gas atomizing method, the obtained melt is cooled and solidified by spraying a gas while discharging the melt from a furnace to obtain the sulfide solid electrolyte material. The obtained sulfide solid electrolyte material is in a powder form. As the gas to be sprayed in the gas atomizing method, an inert gas such as nitrogen or argon is preferably used.

The cooling rate is preferably 0.01°C/sec or more, more preferably 0.05°C/sec or more, and still more preferably 0.1°C/sec or more, from the viewpoint of maintaining the composition obtained by the heating and melting. An upper limit value of the cooling rate is not particularly determined, and a cooling rate of a twin roll process in which a rapid cooling rate is generally said to be high, is 10⁷°C/sec or less.

Here, in the case where the obtained solid is desired to be an amorphous sulfide solid electrolyte material, it is preferable to obtain a solid by rapidly cooling the melt obtained by heating and melting. Specifically, the cooling rate in the case of rapid cooling is preferably 10°C/sec or more, more preferably 100°C/sec or more, still more preferably 500°C/sec or more, and even more preferably 700°C/sec or more. An upper limit value of the cooling rate is not particularly limited, and a cooling rate of a twin roll process in which a rapid cooling rate is generally said to be high, is 10⁷°C/sec or less.

On the other hand, it is also possible to obtain a sulfide solid electrolyte material having a specific crystal structure or a sulfide solid electrolyte material constituted by a crystal phase and an amorphous phase by performing a slow cooling during the cooling to crystallize at least a part of the solid. The cooling rate in the case of the slow cooling is preferably 0.01°C/sec or more, and more preferably 0.05°C/sec or more. The cooling rate is preferably 500°C/sec or less, and more preferably 450°C/sec or less. The cooling rate may be less than 10°C/sec, or may be 5°C/sec or less. The cooling rate may be appropriately adjusted according to crystallization conditions.

The present production method may further include a step of subjecting the sulfide solid electrolyte material obtained by cooling the melt to a known post-treatment or the like. Examples of the post-treatment step include a step of performing a pulverization treatment from the viewpoint of obtaining a desired shape.

### <Apparatus for Producing Sulfide Solid Electrolyte>

Here, an apparatus for producing a sulfide solid electrolyte used in the present production method (hereinafter, also referred to as the present production apparatus and the present heat treatment apparatus) is described.

The present production apparatus is a heat treatment apparatus, and includes a heating portion that heat-treats the sulfide solid electrolyte material, a rotating member that conveys the sulfide solid electrolyte material while heating the sulfide solid electrolyte material by the heating portion, a stationary fixed member that is disposed on an end portion side in an axial direction of the rotating member, and a pressurizing chamber that pressurizes a boundary portion between the rotating member and the fixed member.

In the present production apparatus, an arrangement of the heating portion and the rotating member is not particularly limited as long as the sulfide solid electrolyte material is conveyed by the rotating member while being heated by the heating portion. A method for conveying the sulfide solid electrolyte material by the rotating member is not particularly limited, and the sulfide solid electrolyte material may be disposed on an upper portion of the rotating member and conveyed as in a conveyance roller to be described later, the sulfide solid electrolyte material may be charged into the rotating member and conveyed as in a furnace tube to be described later, or the sulfide solid electrolyte material may be conveyed by a conveying vane provided in the rotating member as in a drying furnace to be described later. The rotating member may be provided to penetrate the heating portion.

The present production apparatus includes the stationary fixed member that is disposed on the end portion side in the axial direction of the rotating member. The fixed member is fixed to a stable place such as a foundation so as to be immovable, is disposed on one side or both end sides of the rotating member or in the vicinity thereof, and holds the entire rotating member in a rotatable state.

In the present production apparatus, in order to hold the entire rotating member in a rotatable state, there is a gap at the boundary portion between the rotating member and the fixed member, or the boundary portion serves as a sliding portion where the rotating member and the fixed member slide and move while rubbing against each other.

The present production apparatus includes the pressurizing chamber that pressurizes the boundary portion between the rotating member and the fixed member. In the related art, when the sulfide solid electrolyte material containing sulfur as an impurity is heat-treated, a sulfur gas is generated. When the generated sulfur gas flows into the boundary portion, a temperature of sulfur at the boundary portion which has low temperature, drops below a melting point, causing sulfur to adhere to the boundary portion, which causes a problem of hindering the rotation of the rotating member. However, in the present production apparatus, the pressurizing chamber that pressurizes the boundary portion between the rotating member and the fixed member is provided, and the heat treatment of the sulfide solid electrolyte material is performed while controlling the pressure in the pressurizing chamber to a pressure higher than the pressure in the heating portion and the outside air pressure. Accordingly, it is possible to perform the heat treatment while preventing the hindering of rotation caused by the adhesion of sulfur to the boundary portion and preventing an inflow of gas that hinders the production from outside air.

The boundary portion is preferably lower in temperature than the heating portion from the viewpoint of heat resistance of a sealing material to be used. In this case, the boundary portion is not included in the heating portion.

Hereinafter, the heat treatment and the pressurization of the pressurizing chamber are described in detail.

### (Heat Treatment)

In the present production method, the sulfide solid electrolyte material is supplied to the heat treatment apparatus, and the sulfide solid electrolyte material is heat-treated in the heating portion. By heat-treating the sulfide solid electrolyte material, sulfur adhering to the surface of the sulfide solid electrolyte material is removed as a gas, and the crystal structure of the sulfide solid electrolyte material is homogenized, so that performance as the solid electrolyte in the secondary battery is improved.

The phrase "the crystal structure is homogenized" means that the crystal structure does not change even if the material is further heat-treated at a predetermined temperature for a long period of time, and reaches an equilibrium state.

From the viewpoint of removing sulfur adhering to the surface of the sulfide solid electrolyte material and from the viewpoint of homogenizing the crystal structure of the sulfide solid electrolyte material, a heating temperature in the heating portion is preferably 300°C or higher, more preferably 325°C or higher, and still more preferably 350°C or higher. The heating temperature in the heating portion is preferably 500°C or lower, more preferably 475°C or lower, and still more preferably 450°C or lower from the viewpoint of preventing deterioration, decomposition, and the like of the components in the sulfide solid electrolyte material due to heating. The heating temperature is preferably 300°C or higher and 500°C or lower.

A method for heating in the heating portion of the heat treatment apparatus, a known method in the related art can be appropriately used depending on the type of the heat treatment apparatus. For example, heaters that heat an object by passing an electric current through a heat generating material such as a kanthal heater, a SiC heater, or a carbon heater, heaters that perform radiation heating such as a halogen heater, high-frequency induction heating devices, and the like can be used as appropriate.

A pressure in the heating portion during the heat treatment is not particularly limited, and for example, a normal pressure or a slight pressure is preferred, and normal pressure is more preferred.

From the viewpoint of preventing the side reactions with the water vapor, the oxygen, and the like during the heat treatment, a dew point of an atmosphere in the heating portion is preferably -20°C or lower. The lower limit is not particularly limited, and is generally -80°C or more. An oxygen concentration is preferably 1,000 ppm by volume or less.

The heating portion of the heat treatment apparatus preferably has an inert gas atmosphere such as N₂ gas, argon gas, or helium gas.

For example, when an atmosphere in the furnace is replaced with the inert gas atmosphere in advance and the sulfide solid electrolyte material is introduced into the heat treatment apparatus, the inert gas atmosphere in the apparatus can be maintained by replacing a purge portion provided in the vicinity of an inlet with an inert gas.

### (Pressurization of Pressurizing Chamber)

In the present production method, the sulfide solid electrolyte material is heat-treated while controlling the pressure in the pressurizing chamber to the pressure higher than the pressure in the heating portion and the outside air pressure. By controlling the pressure in the pressurizing chamber to the pressure higher than the pressure in the heating portion and the outside air pressure, a gas supplied to the pressurizing chamber leaks locally from the pressurizing chamber to the boundary portion, thereby preventing an inflow of the sulfur gas from the heating portion to the boundary portion and the adhesion of sulfur, as well as an inflow of a production hindering gas from the outside air into the heating portion.

From the viewpoint of preventing the inflow of the sulfur gas from the heating portion to the boundary portion and the inflow of the production hindering gas from outside air to the heating portion, as the pressure in the pressurizing chamber, a pressure difference between the pressure in the pressurizing chamber and each of the pressure of the heating portion and the outside air pressure is preferably 0.1 kPa or more, more preferably 0.25 kPa or more, and still more preferably 0.5 kPa or more. An upper limit of the pressure difference is not specifically limited, and is preferably 100 kPa or less, more preferably 75 kPa or less, and still more preferably 50 kPa or less, from the viewpoint of continuous operation stability and practical gas spraying cost. The pressure difference is preferably 0.1 kPa or more and 100 kPa or less.

The pressure difference is preferably 0.1 kPa to 100 kPa, more preferably 0.25 kPa to 75 kPa, and still more preferably 0.5 kPa to 50 kPa.

As the pressurized gas supplied to the pressurizing chamber, it is preferable to use an inert gas such as nitrogen or argon.

The pressurized gas preferably contains an oxygen gas in addition to the inert gas. That is, the present production apparatus preferably includes an oxygen gas supply portion that supplies the oxygen gas to the pressurizing chamber.

A concentration of the oxygen gas in the pressurizing chamber is preferably adjusted to 10 ppm by volume or more, more preferably 25 ppm by volume or more, and still more preferably 50 ppm by volume or more. By setting the oxygen gas concentration in the pressurizing chamber to 10 ppm by volume or more, when the sulfur gas generated in the heating portion flows into the vicinity of the boundary portion, the sulfur gas reacts with the oxygen gas in the pressurized gas leaking from the pressurizing chamber to the boundary portion to form sulfur dioxide having a low melting point, so that the adhesion of sulfur to the boundary portion can be further prevented.

From the viewpoint of preventing a reaction between oxygen and the sulfide solid electrolyte material and obtaining a sulfide solid electrolyte having a desired composition, the oxygen gas concentration in the pressurizing chamber is preferably 1000 ppm by volume or less, more preferably 750 ppm by volume or less, and still more preferably 500 ppm by volume or less.

The oxygen gas concentration in the pressurizing chamber is preferably 10 ppm by volume to 1000 ppm by volume, more preferably 25 ppm by volume to 750 ppm by volume, and still more preferably 50 ppm by volume to 500 ppm by volume.

A dew point of the pressurized gas is preferably less than -30°C, more preferably less than -40°C, and still more preferably less than -50°C at atmospheric pressure from the viewpoint of preventing a side reaction between the sulfide solid electrolyte material and the water vapor.

A temperature of the pressurized gas is not particularly limited, but is, for example, 100°C or less, and preferably room temperature.

In the present production method, since the heat treatment apparatus includes the rotating member that conveys the sulfide solid electrolyte material while heating the sulfide solid electrolyte material by the heating portion, the sulfide solid electrolyte material can be continuously supplied and heat-treated, and mass production of the sulfide solid electrolyte becomes possible. Further, the effect of the present invention is further enhanced.

### (Cooling and Take Out)

The heat-treated product subjected to the heat treatment in the heating portion while the pressurizing chamber is pressurized under the above conditions is preferably taken out from the heat treatment apparatus after being cooled. That is, in a case where a raw material inlet side of the heat treatment apparatus is upstream and an outlet side is downstream, it is preferable that a cooling portion that cools the heat-treated product is provided downstream of the heating portion of the heat treatment apparatus, and the heat-treated product conveyed from the heating portion by the rotating member is cooled in the cooling portion and discharged from the heat treatment apparatus.

As described above, it is preferable to obtain the sulfide solid electrolyte by continuously performing charging of the sulfide solid electrolyte material, heat treatment, cooling, and taking.

When the heat treatment apparatus does not include the cooling portion, the heat-treated product may be cooled after being discharged from the heat treatment apparatus.

As a cooling method, natural air cooling, water cooling, gas spray cooling, and the like can be appropriately used.

The cooling rate is, for example, preferably 0.01°C/sec or more, more preferably 0.025°C/sec or more, and still more preferably 0.05°C/sec or more. An upper limit value of the cooling rate is not particularly limited, but is, for example, 10°C/sec or less.

The present production apparatus is not particularly limited as long as the present production apparatus has the above-described configuration. For example, the heat treatment apparatus may be any known apparatus including a heating portion and used for heat-treating the solid electrolyte material in the related art, and a material and a size of the heat treatment apparatus can be freely selected.

Among them, a heat treatment apparatus which is provided with a conveying unit for the sulfide solid electrolyte material and can continuously heat-treat the sulfide solid electrolyte material is preferable, and examples thereof include a roller hearth kiln furnace, a rotary kiln furnace, and a stirring drying furnace. Hereinafter, embodiments of the present production apparatus including furnaces of the embodiments are specifically described.

### (Apparatus for Producing Sulfide Solid Electrolyte according to First Embodiment)

A first embodiment of the present production apparatus is described with reference to FIGS. 2 to 6. In the first embodiment, the present production apparatus includes a roller hearth kiln furnace.

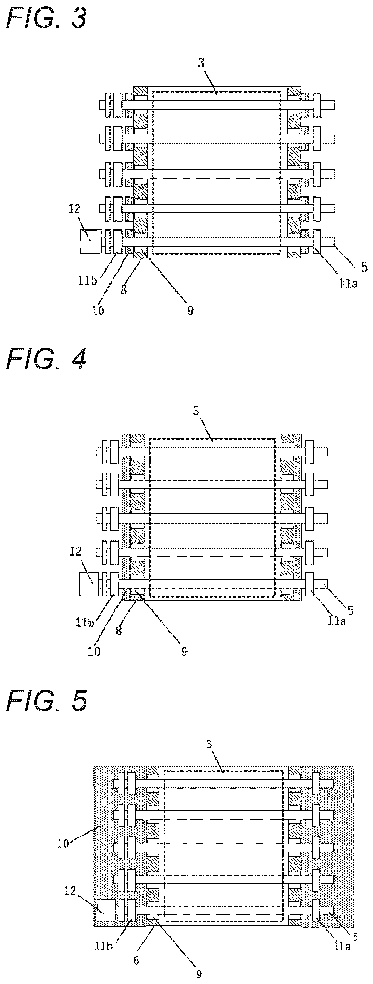

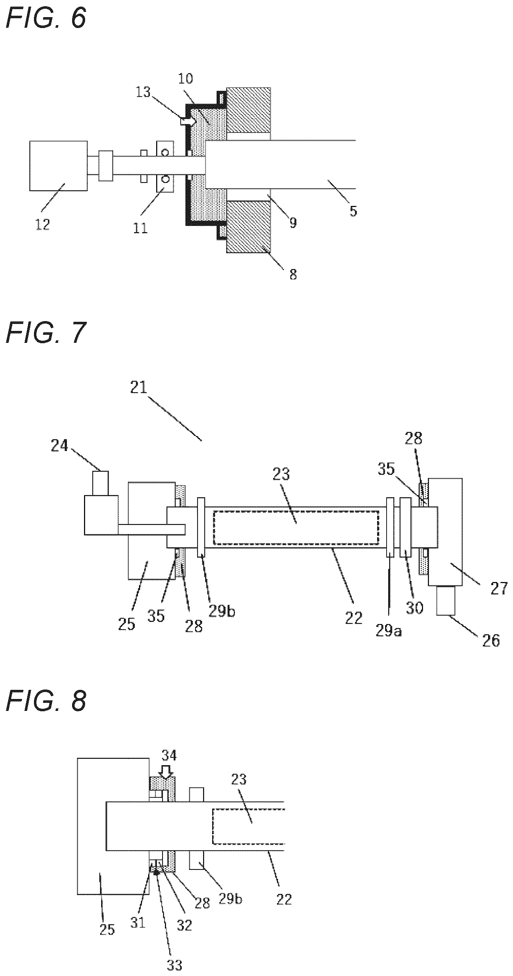

FIG. 2 is a schematic side cross-sectional view showing an example of the present production apparatus of a roller hearth kiln furnace type. FIG. 3 is a schematic top cross-sectional view illustrating an example of a heating portion and a peripheral portion thereof in the present production apparatus of the roller hearth kiln furnace type. FIGS. 4 and 5 are schematic top cross-sectional views showing other examples of the heating portion and the peripheral portion thereof in the present production apparatus of the roller hearth kiln furnace type. FIG. 6 is a schematic top cross-sectional view illustrating an example of a boundary portion of a rotating member and a pressurizing chamber in the present production apparatus of a roller hearth kiln furnace type.

In FIG. 2, a production apparatus 1 of a roller hearth kiln furnace type includes a heat treatment furnace 2 including a heating portion 3 that heat-treats the sulfide solid electrolyte material and a cooling portion 4, and a conveyance roller 5 that conveys the sulfide solid electrolyte material.

In FIG. 3, the conveyance roller 5 is provided to penetrate the heating portion 3 in the heat treatment furnace 2. That is, in the production apparatus 1, the conveyance roller 5 is a rotating member provided to penetrate the heating portion 3.

The production apparatus 1 includes a boundary portion 9 between the conveyance roller 5 (rotating member side) and a furnace wall 8 (fixed member side) of the heat treatment furnace 2. In the boundary portion 9, there is a gap that allows the conveyance roller 5 to rotate. The pressurizing chamber 10 is provided in the production apparatus 1 to pressurize the boundary portion 9 from an outside of the heat treatment furnace 2. It is desirable that a width of the gap is small from the viewpoint of enabling the boundary portion 9 to be pressurized, and the width is preferably 10 mm or less, more preferably 5 mm or less, and still more preferably 1 mm or less. A lower limit value of the width of the gap is not limited as long as the conveyance roller 5 is slidable. The width of the gap is not required to be uniform, and there is no problem even if there is a partial minimum gap. The gap at the boundary portion 9 may have any mechanical form as long as the conveyance roller 5 can rotate and there is a penetration portion. The gap of the penetration portion may be narrowed so that members are rubbed against each other.

The pressurizing chamber 10 may be installed in any manner as long as the pressurizing chamber 10 is provided to pressurize the boundary portion 9 from the outside of the heat treatment furnace 2. In FIG. 3, the pressurizing chambers are provided to individually pressurize a plurality of boundary portions 9 present in the production apparatus 1. However, for example, as shown in FIGS. 4 and 5, the pressurizing chamber may be provided to collectively pressurize the plurality of boundary portions 9, or as shown in FIG. 5, the pressurizing chamber may be provided to cover an entire surrounding portion of the conveyance roller 5, including roll bearings 11a and 11b that rotatably support the conveyance roller 5 and a drive motor 12 that rotates the conveyance roller 5.

Hereinafter, an example of the method for producing a sulfide solid electrolyte is described when the production apparatus 1 of a roller hearth kiln furnace type is used.

The sulfide solid electrolyte material placed in a container is charged from an inlet 6 of the heat treatment furnace 2 and conveyed to the heating portion 3 using the conveyance roller 5. An atmosphere inside the heat treatment furnace 2 is replaced with an inert gas in advance, and when the sulfide solid electrolyte material is charged, it is preferable to fill a purge portion (not shown) provided in the vicinity of the inlet 6 of the heat treatment furnace 2 with an inert gas or the like before the sulfide solid electrolyte material is charged.

The sulfide solid electrolyte material conveyed to the heating portion 3 by the conveyance roller 5 is heat-treated in the heating portion 3. Preferred conditions for the heat treatment are as described above. At this time, the heat treatment is performed while controlling a pressure in the pressurizing chamber 10 to a pressure higher than a pressure in the heating portion 3 and the outside air pressure. Preferable conditions for the pressurization are as described above.

As shown in FIG. 6, the pressurization of the pressurizing chamber may be performed by supplying a pressurized gas through a pressurized gas supply port 13 provided in the pressurizing chamber 10, and for example, a gas is supplied from a gas supply portion (not shown) to the pressurized gas supply port 13 through a pipe (not shown).

Preferably, an oxygen gas supply portion (not shown) that supplies an oxygen gas is provided, and a gas containing the oxygen gas is supplied to the pressurizing chamber 10. The gas containing the oxygen gas is prepared, for example, by mixing the oxygen gas supplied from the oxygen gas supply portion and an inert gas supplied from an inert gas supply portion (not shown) in a pipe connecting the supply portions and the pressurized gas supply port 13 to form a mixed gas, which is then supplied to the pressurizing chamber 10 from the pressurized gas supply port 13. For example, the oxygen gas supplied from the oxygen gas supply portion and the inert gas supplied from the inert gas supply portion may each be supplied from a plurality of pressurized gas supply ports 13 to the pressurizing chamber 10.

When the sulfide solid electrolyte material is heat-treated in the heating portion 3, sulfur adhering to a surface of the sulfide solid electrolyte material is gasified. Since the gasified sulfur is cooled at the furnace wall 8 and the boundary portion 9 where temperatures are lower than that of the heating portion 3, sulfur may adhere to these portions. In the present production method, since the gas supplied to the pressurizing chamber leaks to the boundary portion 9 by pressurizing the pressurizing chamber 10, it is possible to prevent the adhesion of sulfur to the boundary portion 9 and the inflow of the production hindering gas from the outside air to the heating portion.

The heat-treated product subjected to the heat treatment in the heating portion 3 is cooled in the cooling portion 4 of the heat treatment furnace 2 shown in FIG. 2, and is discharged from an outlet 7. The heat-treated product may be cooled after being discharged from the outlet 7. In the obtained sulfide solid electrolyte, sulfur adhering to the surface of the sulfide solid electrolyte material is removed, and a crystal structure becomes homogeneous, so that a solid electrolyte having excellent battery performance is obtained.

### (Apparatus for Producing Sulfide Solid Electrolyte according to Second Embodiment)

A second embodiment of the present production apparatus is described with reference to FIGS. 7 and 8. In the second embodiment, the present production apparatus includes a rotary kiln furnace.

FIG. 7 is a schematic side cross-sectional view showing an example of the present production apparatus of a rotary kiln furnace type. FIG. 8 is a schematic side cross-sectional view illustrating an example of a sliding portion of a rotating member and a pressurizing chamber in the present production apparatus of the rotary kiln furnace type.

In FIG. 7, a production apparatus 21 of a rotary kiln furnace type includes a furnace tube 22 including a heating portion 23 that heat-treats a sulfide solid electrolyte material. The furnace tube 22 is provided with a bearing 29b provided on an inlet 24 side and a bearing 29a provided on an outlet 26 side, such that the bearing 29a side is lower than the bearing 29b side. The furnace tube 22 thus disposed with a gradient is rotated by a rotation driving portion 30, whereby the sulfide solid electrolyte material is transported from the inlet 24 side through the heating portion 23 to the outlet 26 side. That is, in the production apparatus of the rotary kiln furnace type, the furnace tube 22 is a rotating member into which the sulfide solid electrolyte material is charged and which transports the sulfide solid electrolyte material.

As shown in FIG. 7, in the production apparatus 21, the furnace tube 22 is provided to penetrate the heating portion 23, and the furnace tube 22 includes the sliding portion as a boundary portion in a seal portion 35. Specifically, for example, as shown in FIG. 8, a sliding portion 33 as the boundary portion is provided between a seal ring (rotating member side) 32 provided in the furnace tube 22 and a seal ring (fixed member side) 31 provided in a charging portion 25 provided to cover an end opening portion on the inlet 24 side of the furnace tube 22. The seal rings may be provided in the furnace tube 22 or the charging portion 25 via installation members for installing the seal rings.

The pressurizing chamber 28 is provided in the production apparatus 21 to pressurize the sliding portion 33 from an outside of the furnace tube 22.

As shown in FIG. 7, similarly to the charging portion 25 side, the sliding portion 33 (not illustrated) is also provided on a discharging portion 27 side provided to cover an end opening portion on the outlet 26 side of the furnace tube 22, and the pressurizing chamber 28 is provided to cover the sliding portion 33.

Hereinafter, a method for producing a sulfide solid electrolyte is described when the present production apparatus 21 of the rotary kiln furnace type is used.

The sulfide solid electrolyte material is charged from the inlet 24. Since the furnace tube 22 is provided with the gradient, the sulfide solid electrolyte material is conveyed to the heating portion 23. An atmosphere of a passage region of the sulfide solid electrolyte material from the inlet 24 to the outlet 26 is replaced with an inert gas in advance, and when the sulfide solid electrolyte material is charged, it is preferable to fill a purge portion (not shown) provided in the vicinity of the inlet 24 with the inert gas or the like before the sulfide solid electrolyte material is charged.

The sulfide solid electrolyte material conveyed to the heating portion 23 is heat-treated. Preferred conditions for the heat treatment are as described above. At this time, the heat treatment is performed while controlling a pressure in the pressurizing chamber 28 to a pressure higher than a pressure in the heating portion 23 and an outside air pressure. Preferable conditions for the pressurization are as described above.

As shown in FIG. 8, the pressurizing chamber may be pressurized by supplying a pressurized gas from a pressurized gas supply port 34 provided in the pressurizing chamber 28, and for example, a gas is supplied from a gas supply portion (not shown) to the pressurized gas supply port 34 through a pipe (not shown).

Preferably, an oxygen gas supply portion (not shown) that supplies an oxygen gas is provided, and a gas containing the oxygen gas is supplied to the pressurizing chamber 28. The gas containing the oxygen gas is prepared, for example, by mixing the oxygen gas supplied from the oxygen gas supply portion and an inert gas supplied from an inert gas supply portion (not shown) in a pipe connecting each supply portion and the pressurized gas supply port 34 to form a mixed gas, which is then supplied to the pressurizing chamber 28 from the pressurized gas supply port 34. For example, the oxygen gas supplied from the oxygen gas supply portion and the inert gas supplied from the inert gas supply portion may each be supplied from a plurality of pressurized gas supply ports 34.

When the sulfide solid electrolyte material is heat-treated in the heating portion 23, sulfur adhering to a surface of the sulfide solid electrolyte material is gasified. Since the gasified sulfur is cooled at a furnace wall at an end portion of the furnace tube 22, a wall of the charging portion 25 provided to cover an end opening portion of the furnace tube 22, a wall of the discharging portion 27, and the sliding portion 33, which have temperatures lower than that of the heating portion 23, sulfur may adhere to these portions. **In** the present production method, since the gas supplied to the pressurizing chamber leaks to the sliding portion 33 by pressurizing the pressurizing chamber 28, it is possible to prevent the adhesion of sulfur to the sliding portion 33 and an inflow of a production hindering gas from outside air to the heating portion.

A heat-treated product subjected to the heat treatment in the heating portion 23 is discharged from the outlet 26 via the discharging portion 27 provided to cover the end opening portion of the furnace tube 22 shown in FIG. 7. The heat-treated product that has passed through the discharging portion 27 may be cooled in a cooling portion (not shown) provided between the discharging portion 27 and the outlet 26, or may be cooled after the heat-treated product is discharged from the outlet 26. **In** the obtained sulfide solid electrolyte, sulfur adhering to the surface of the sulfide solid electrolyte material is removed, and a crystal structure becomes homogeneous, so that a solid electrolyte having excellent battery performance is obtained.

### (Apparatus for Producing Sulfide Solid Electrolyte according to Third Embodiment)

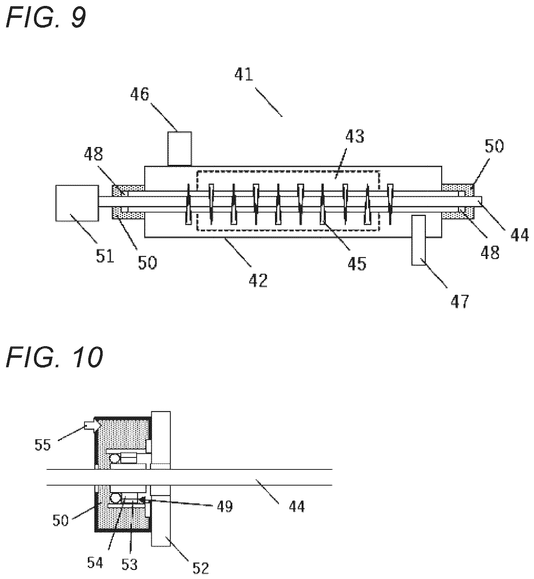

A third embodiment of the present production apparatus is described with reference to FIGS. 9 and 10. **In** the third embodiment, the present production apparatus includes a stirring drying furnace.

FIG. 9 is a schematic side cross-sectional view showing an example of the present production apparatus of a stirring drying furnace type. FIG. 10 is a schematic side cross-sectional view illustrating an example of a sliding portion of a rotating member and a pressurizing chamber in the present production apparatus of the stirring drying furnace type.

In FIG. 9, a production apparatus 41 of the stirring drying furnace type includes a drying furnace 42 including a heating portion 43 that heat-treats a sulfide solid electrolyte material, and a screw conveying portion including a drive shaft 44 and a conveying vane 45 as a conveying unit of the sulfide solid electrolyte material. The screw conveying portion conveys the sulfide solid electrolyte material by rotating the drive shaft 44, which is provided with the conveying vane 45, around its axis using a drive motor 51.

As shown in FIG. 9, in the production apparatus 41, the drive shaft 44 in the screw conveying portion is provided to penetrate the heating portion 43. That is, in the production apparatus 41 of the stirring drying furnace type, the drive shaft 44 of the screw conveying portion is a rotating member provided to penetrate the heating portion 43. The drive shaft 44 includes the sliding portion as a boundary portion in a shaft seal portion 48. Specifically, for example, as shown in FIG. 10, a sliding portion 49 is provided between a seal ring 54 (rotating member side) provided on the drive shaft 44 and a seal ring 53 (fixed member side) provided on a furnace wall 52 of the drying furnace 42. The seal rings may be provided in the furnace drive shaft 44 and the furnace wall 52 via installation members for installing the seal rings.

A pressurizing chamber 50 is provided in the production apparatus 41 to pressurize the sliding portion 49 from outside of the drying furnace 42 and the drive shaft 44.

Hereinafter, a method for producing a sulfide solid electrolyte is described when the present production apparatus 41 of the stirring drying furnace type is used.

The sulfide solid electrolyte material is charged from an inlet 46. The sulfide solid electrolyte material is conveyed to the heating portion 43 by the screw conveying portion. An atmosphere inside the drying furnace 42 is replaced with an inert gas in advance, and when the sulfide solid electrolyte material is charged, it is preferable to fill a purge portion (not shown) provided in the vicinity of the inlet 46 with an inert gas or the like before the sulfide solid electrolyte material is charged.

The sulfide solid electrolyte material conveyed to the heating portion 43 is heat-treated. Preferred conditions for the heat treatment are as described above. At this time, the heat treatment is performed while controlling a pressure in the pressurizing chamber 50 to a pressure higher than a pressure in the heating portion 43 and an outside air pressure. Preferable conditions for the pressurization are as described above.

As shown in FIG. 10, the pressurizing chamber may be pressurized by supplying a pressurized gas from a pressurized gas supply port 55 provided in the pressurizing chamber 50, and for example, a gas is supplied from a gas supply portion (not shown) to the pressurized gas supply port 55 through a pipe (not shown).

Preferably, an oxygen gas supply portion (not shown) that supplies an oxygen gas is provided, and a gas containing the oxygen gas is supplied to the pressurizing chamber 50. The gas containing the oxygen gas is prepared, for example, by mixing the oxygen gas supplied from the oxygen gas supply portion and an inert gas supplied from an inert gas supply portion (not shown) in a pipe connecting each supply portion and the pressurized gas supply port 55 to form a mixed gas, which is then supplied to the pressurizing chamber 50 from the pressurized gas supply port 55. For example, the oxygen gas supplied from the oxygen gas supply portion and the inert gas supplied from the inert gas supply portion may each be supplied from a plurality of pressurized gas supply ports 55.

When the sulfide solid electrolyte material is heat-treated in the heating portion 43, sulfur adhering to a surface of the sulfide solid electrolyte material is gasified. Since the gasified sulfur is cooled at the furnace wall 52 of an end portion of the drying furnace 42 and the sliding portion 49 where temperatures are lower than that of the heating portion 43, sulfur may adhere to these portions. **In** the present production method, since the gas supplied to the pressurizing chamber leaks to the sliding portion 49 by pressurizing the pressurizing chamber 50, it is possible to prevent the adhesion of sulfur to the sliding portion 49 and an inflow of a production hindering gas from outside air to the heating portion.

A heat-treated product subjected to the heat treatment in the heating portion 43 is discharged from an outlet 47 shown in FIG. 9. The heat-treated product subjected to the heat treatment in the heating portion 43 may be cooled in a cooling portion (not shown) provided between the heating portion 43 and the outlet 47, or may be cooled after the heat-treated product is discharged from the outlet 47. **In** the obtained sulfide solid electrolyte, sulfur adhering to the surface of the sulfide solid electrolyte material is removed, and a crystal structure becomes homogeneous, so that a solid electrolyte having excellent battery performance is obtained.

### (Pulverizing)

The obtained sulfide solid electrolyte may be further pulverized to further reduce a particle size of the sulfide solid electrolyte. A pulverization method may be, for example, a wet pulverization method. **In** the case of the wet pulverization method, a type of used solvent is not particularly limited, but since the sulfide solid electrolyte has a tendency to react with moisture and deteriorate, it is preferable to use a non-aqueous organic solvent.

A type of the non-aqueous organic solvent is not particularly limited, and examples thereof include a hydrocarbon-based solvent, an organic solvent containing a hydroxy group, an organic solvent containing an ether group, an organic solvent containing a carbonyl group, an organic solvent containing an ester group, an organic solvent containing an amino group, an organic solvent containing a formyl group, an organic solvent containing a carboxy group, an organic solvent containing an amide group, an organic solvent containing a benzene ring, an organic solvent containing a mercapto group, an organic solvent containing a thioether group, an organic solvent containing a thioester group, an organic solvent containing a disulfide group, and a halogenated alkyl.

Examples of the hydrocarbon-based solvent include cyclohexane, heptane, octane, and toluene, and cyclohexane, heptane, and octane are preferred from the viewpoint of a low saturated moisture concentration. From the viewpoint of adjusting the moisture concentration, it is also preferable to use a mixed solvent in which these hydrocarbon-based solvents are mixed with toluene, dibutyl ether, or the like.

From the viewpoint of preventing a decrease in lithium-ion conductivity due to the sulfide solid electrolyte reacting with water during pulverization of the sulfide solid electrolyte, it is preferable that the moisture concentration of the non-aqueous organic solvent is low. The moisture concentration of the non-aqueous organic solvent may be, for example, 170 ppm by mass or less, 150 ppm by mass or less, 120 ppm by mass or less, or 100 ppm by mass or less.

The wet pulverization method may be carried out using a pulverizer such as a ball mill, a planetary ball mill, or a bead mill. In the wet pulverization, in addition to the above-mentioned solvent, an ether compound, an ester compound, or a nitrile compound may be added as an additive (dispersant).

When the solvent or the additive remains in the sulfide solid electrolyte obtained through the wet pulverization, a drying step may be carried out. A drying condition may be, for example, a temperature of 100°C or higher and 200°C or lower. A drying time is not particularly limited and may be, for example, 10 minutes or more and 24 hours or less. The drying step may be carried out under a reduced pressure, for example an absolute pressure of 50 kPa or less. The drying step can be carried out using a hot plate, a drying furnace, an electric furnace, or the like.

### (Sulfide Solid Electrolyte)

The sulfide solid electrolyte obtained by the present production method includes a sulfide solid electrolyte containing a lithium element. Examples of the sulfide solid electrolyte obtained by the present production method include a sulfide solid electrolyte having an LGPS crystal structure such as Li₁₀GeP₂S₁₂, a sulfide solid electrolyte having an argyrodite crystal structure such as Li₆PS₅Cl, Li_{5.4}PS_{4.4}Cl_{1.6}, and Li_{5.4}PS_{4.4}Cl_{0.8}Br_{0.8}, Li-P-S-Ha-based (Ha represents at least one element selected from the halogen elements) crystallized glass; and LPS crystallized glass such as Li₇P₃S₁₁.

Depending on the purpose, the sulfide solid electrolyte may be a sulfide solid electrolyte having a specific crystal structure, or a sulfide solid electrolyte including a crystal phase and an amorphous phase. The crystal phase is more preferably an argyrodite crystal phase from the viewpoint of lithium-ion conductivity.

As a sulfide solid electrolyte having excellent lithium-ion conductivity, a sulfide solid electrolyte having elements of Li-P-S-Ha is preferable, and it is more preferable that the sulfide solid electrolyte has a crystal phase. In the halogen element, the halogen element is preferably derived from one or more selected from the group consisting of lithium chloride, lithium bromide, and lithium iodide.

The lithium-ion conductivity of the sulfide solid electrolyte is preferably 1.0 × 10⁻⁴ S/cm or more, more preferably 5.0 × 10⁻⁴ S/cm pr more, still more preferably 1.0 × 10⁻³ S/cm or more, and particularly preferably 5.0 × 10⁻³ S/cm or more from the viewpoint of improving the battery characteristics when used in a lithium-ion secondary battery. The lithium-ion conductivity is measured using an AC impedance measuring device (for example, potentiostat/galvanostat VSP, manufactured by Bio-Logic Sciences Instruments) under the following measurement conditions: measurement frequency: 100 Hz to 1 MHz, measurement voltage: 100 mV, measurement temperature: 25°C.

The obtained sulfide solid electrolyte can be identified by analyzing the crystal structure by X-ray diffraction (XRD) measurement, and analyzing the elemental composition using various methods such as ICP emission spectrometry, atomic absorption spectrometry, and ion chromatography. For example, P and S can be measured by ICP emission spectrometry, Li can be measured by atomic absorption spectrometry, and Ha can be measured by ion chromatography.

By performing the Raman spectrum measurement, homogeneity of the composition of the sulfide solid electrolyte can be evaluated. Specifically, samples obtained from the obtained sulfide solid electrolyte is subjected to the Raman spectrum measurement at any two or more points. From the viewpoint of improving accuracy of the evaluation, the number of measurement points is preferably 8 or more, and more preferably 10 or more. Preferable conditions for the Raman spectrum measurement when evaluating the homogeneity of the composition of the sulfide solid electrolyte include a spot diameter of 3 µm and the number of 10 of the measurement points. By setting the spot diameter to 3 µm, an analysis area in the Raman spectrum measurement becomes a size suitable for evaluating the homogeneity of the composition of the sulfide solid electrolyte at a micro level.

It is believed that the smaller the variation in the peak wavenumber (peak position) derived from the structure of the sulfide solid electrolyte is, such as PS₄³⁻ in each measurement result, the more homogeneous the composition of the sulfide solid electrolyte is. Alternatively, it is believed that the smaller the variation in the full width at half maximum of the peaks derived from the structure of the sulfide solid electrolyte is, the more homogeneous the composition of the sulfide solid electrolyte is.

It is preferable to confirm peaks derived from a P-S bond as the peaks derived from the structure of the sulfide solid electrolyte although it depends on the composition of the obtained sulfide solid electrolyte. A position of the peak derived from the P-S bond varies depending on a composition system, but typically, the position is between 350 cm⁻¹ and 500 cm⁻¹. Hereinafter, in the present specification, the variation in peak position and the variation in full width at half maximum of the peak refer to those confirmed for the most intense peak among the peaks derived from the P-S bond.

The variation in peak position can be evaluated as follows. That is, when a standard deviation of the peak positions for each measurement point obtained by the Raman spectrum measurement is calculated and the variation in peak position is expressed as (peak position average value) ± (standard deviation), a standard deviation value is preferably within 2 cm⁻¹, more preferably within 1 cm⁻¹, and still more preferably within 0.5 cm⁻¹. Here, the peak position refers to a position of a peak top. For example, when the sulfide solid electrolyte obtained by the present production method was subjected to the Raman spectrum measurement with a spot diameter of 3 µm and 10 measurement points, the standard deviation of the peak positions of the peaks derived from the P-S bond in a range of 350 cm⁻¹ to 500 cm⁻¹ for each measurement point is preferably within 2 cm⁻¹, more preferably within 1 cm⁻¹, and still more preferably within 0.5 cm⁻¹.

The variation in full width at half maximum of the peaks can be evaluated as follows. That is, the standard deviation of the full width at half maximum of the peaks for each measurement point obtained by the Raman spectrum measurement is calculated by determining the full width at half maximum of each peak and then calculating a standard deviation of the values. When the variation in full width at half maximum is expressed as (average value of full width at half maximum of peaks) ± (standard deviation), the standard deviation value is preferably within 2 cm⁻¹, and more preferably within 1.5 cm⁻¹. The full width at half maximum of the peaks herein refers to a width at which half the peak intensity of the peaks derived from the P-S bond intersects with the peaks derived from the P-S bond when the Raman spectrum is plotted. For example, when the sulfide solid electrolyte obtained by the present production method was subjected to the Raman spectrum measurement with a spot diameter of 3 µm and 10 measurement points, the standard deviation in full width at half maximum of the peaks derived from the P-S bond in a range of 350 cm⁻¹ to 500 cm⁻¹ for each measurement point is preferably within 2 cm⁻¹, and more preferably within 1.5 cm⁻¹.

The present invention is not limited to the above-described embodiments, and various modifications can be adopted within the scope of the present invention. For example, the present invention is not limited to the above-described embodiments, and may be modified and improved as appropriate. In addition, the material, shape, size, number, arrangement place, and the like of each component in the above-described embodiments are optional as long as the present invention can be achieved, and are not limited.

As described above, the present description discloses the following.
[1] A method for producing a sulfide solid electrolyte including:
   supplying a sulfide solid electrolyte material to a heat treatment apparatus; and
   heat-treating the sulfide solid electrolyte material,
   in which the heat treatment apparatus includes: a heating portion configured to heat-treat the sulfide solid electrolyte material; a rotating member configured to convey the sulfide solid electrolyte material while heating the sulfide solid electrolyte material by the heating portion; a stationary fixed member that is disposed on an end portion side in an axial direction of the rotating member; and a pressurizing chamber configured to pressurize a boundary portion between the rotating member and the fixed member, and
   the sulfide solid electrolyte material is heat-treated while controlling a pressure in the pressurizing chamber to a pressure higher than a pressure in the heating portion and an outside air pressure.
[2] The method for producing a sulfide solid electrolyte according to [1], in which the sulfide solid electrolyte material is obtained by mechanically milling or heating and melting a sulfide solid electrolyte raw material.
[3] The method for producing a sulfide solid electrolyte according to [1] or [2], in which an oxygen gas concentration in the pressurizing chamber is 10 ppm by volume or more.
[4] The method for producing a sulfide solid electrolyte according to any one of [1] to [3], in which a heating temperature in the heating portion is 300°C or higher.
[5] The method for producing a sulfide solid electrolyte according to any one of [1] to [4], in which a pressure difference between the pressure in the pressurizing chamber and each of the pressure in the heating portion and the outside air pressure is 0.1 kPa or more.
[6] The method for producing a sulfide solid electrolyte according to any one of [1] to [5], in which the sulfide solid electrolyte material is continuously supplied and heat-treated.
[7] An apparatus for producing a sulfide solid electrolyte, the apparatus including:
   a heating portion configured to heat-treat a sulfide solid electrolyte material;
   a rotating member configured to convey the sulfide solid electrolyte material while heating the sulfide solid electrolyte material by the heating portion;
   a stationary fixed member that is disposed on an end portion side in an axial direction of the rotating member; and
   a pressurizing chamber configured to pressurize a boundary portion between the rotating member and the fixed member.
[8] The apparatus for producing a sulfide solid electrolyte according to [7], the apparatus further including an oxygen gas supply portion configured to supply an oxygen gas to the pressurizing chamber.

### EXAMPLES

Hereinafter, the present invention is described in detail with reference to Examples, but the present invention is not limited thereto. Examples 1 to 3 are Inventive Examples, and Example 4 is Comparative Example.

### Example 1

A test is performed in accordance with the specifications of the production apparatus 1 shown in FIG. 2.

The sulfide solid electrolyte material is obtained as follows. That is, each raw material is mixed to have a molar ratio (1.9:0.5:1.0:0.6) of Li₂S, P₂S₅, LiCl, and LiBr to prepare 500g of the mixed raw material, the mixed raw material is put into a pot made of zirconia together with a zirconia ball having a diameter of 10 mm in a glove box in a nitrogen atmosphere, and the pot is completely sealed. Mechanical milling is performed for 15 hours using a planetary ball mill at a rotation speed of 370 rpm to obtain a sulfide solid electrolyte material.

Nitrogen purging is performed such that a pressure in the heating portion 3 in the heat treatment furnace 2 is 0.05 kPa, a dew point is -60°C, and an oxygen concentration is less than 50 ppm by volume.

A heating temperature in the heating portion 3 is set to 430°C, and a pressurized gas which is a mixed gas of oxygen and nitrogen is supplied such that a pressure in the pressurizing chamber is 0.55 kPa, a dew point is less than 0°C °C, and an oxygen concentration is 100 ppm by volume. That is, a difference between the pressure in the pressurizing chamber and the pressure in the heating portion is 0.5 kPa, and a difference between the pressure in the pressurizing chamber and an outside air pressure is 0.55 kPa.

Subsequently, 500g of the sulfide solid electrolyte material is put into a convey container, the sulfide solid electrolyte material is charged into the heat treatment furnace 2 while the purge portion provided in the vicinity of the inlet 6 is purged with nitrogen, and the sulfide solid electrolyte material is conveyed to the heating portion 3 by the conveyance roller 5 to perform a heat treatment.

A heat-treated product is cooled in the cooling portion 4, and a sulfide solid electrolyte is taken out.

A supply of the sulfide solid electrolyte material to the heating portion 3 is performed by continuously supplying the sulfide solid electrolyte material to the container at a conveyance speed of 11 mm/min, and the heat treatment is continuously performed for a heating time of 1.5 hours. After 12 hours, the supply of the sulfide solid electrolyte material is stopped, and operation of the production apparatus 1 is stopped.

In the boundary portion 9, adhesion of sulfur cannot be found.

### Example 2

A test is performed in accordance with the specifications of the production apparatus 21 shown in FIG. 7.

As the sulfide solid electrolyte material, a sulfide solid electrolyte material was prepared in the same manner as in Example 1.

Nitrogen purging is performed such that a pressure in the heating portion 23 in the furnace tube 22 is 0.05 kPa, a dew point is -60°C, and an oxygen concentration is less than 50 ppm by volume.

A heating temperature in the heating portion 23 is set to 430°C, and a pressurized gas is supplied such that a pressure in a pressurizing chamber is 0.55 kPa, a dew point is less than 0°C °C, and an oxygen concentration is 100 ppm by volume. That is, a difference between the pressure in the pressurizing chamber and the pressure in the heating portion is 0.5 kPa, and a difference between the pressure in the pressurizing chamber and an outside air pressure is 0.55 kPa.

Subsequently, the sulfide solid electrolyte material is continuously charged from the inlet 24 while the purge portion provided in the vicinity of the inlet 24 is purged with nitrogen, and the sulfide solid electrolyte material is conveyed to the heating portion 23 and subjected to a heat treatment.

The heat-treated product is cooled, and the sulfide solid electrolyte is taken out.

The sulfide solid electrolyte material is continuously supplied to the heating portion 23 at a rate of 1 g/sec. After 12 hours, the supply of the sulfide solid electrolyte material is stopped when 43 kg of the sulfide solid electrolyte is obtained, and operation of the production apparatus 21 is stopped.

In the sliding portion 33, adhesion of sulfur cannot be found.

### Example 3

A test is performed in accordance with the specifications of the production apparatus 41 shown in FIG. 9.

As the sulfide solid electrolyte material, a sulfide solid electrolyte material was prepared in the same manner as in Example 1.

Nitrogen purging is performed such that a pressure of the heating portion 43 in the drying furnace 42 is 0.05 kPa, a dew point is -60°C, and an oxygen concentration is less than 50 ppm by volume.

A heating temperature in the heating portion 43 is set to 300°C, and a pressurized gas is supplied such that a pressure in a pressurizing chamber is 0.55 kPa, a dew point is less than 0°C, and an oxygen concentration is 100 ppm by volume. That is, a difference between the pressure in the pressurizing chamber and the pressure in the heating portion is 0.5 kPa, and a difference between the pressure in the pressurizing chamber and an outside air pressure is 0.55 kPa.

Subsequently, the sulfide solid electrolyte material is continuously charged from the inlet 46 while the purge portion provided in the vicinity of the inlet 46 is purged with nitrogen, and the sulfide solid electrolyte material is conveyed to the heating portion 43 by the screw conveying portion and subjected to a heat treatment.

A heat-treated product is cooled, and a sulfide solid electrolyte is taken out.

The sulfide solid electrolyte material is continuously supplied to the heating portion 43 at a rate of 1 g/sec. After 12 hours, the supply of the sulfide solid electrolyte material is stopped when 43 kg of the sulfide solid electrolyte is obtained, and operation of the production apparatus 41 is stopped.

In the sliding portion 49, adhesion of sulfur cannot be found.

### Example 4

A test is performed in accordance with the specifications of the production apparatus 1 shown in FIG. 2 except that the pressurizing chamber 10 is not provided.

That is, conditions are the same as those in Example 1 except that the pressurizing chamber 10 is not pressurized.

When 43 kg of the sulfide solid electrolyte is obtained, operation of the production apparatus is stopped.

In the boundary portion 9, adhesion of sulfur is not found.

Although various embodiments have been described above with reference to the drawings, it is needless to say that the present invention is not limited to such examples. It is obvious for a person skilled in the art that various modifications and variations can be made within the category described in the scope of claims and it is understood that such modifications and variations naturally belong to the technical scope of the present invention. Further, the components described in the above embodiment may be combined in any manner without departing from the spirit of the invention.

The present application is based on a Japanese Patent Application (No. 2022-187379) filed on November 24, 2022, contents of which are incorporated herein by reference.

### REFERENCE SIGNS LIST

1, 21, 41 apparatus for producing sulfide solid electrolyte
2 heat treatment furnace
3 heating portion
4 cooling portion
5 conveyance roller
6 inlet
7 outlet
8 furnace wall
9 boundary portion
10 pressurizing chamber
11a, 11b roll bearing
12 drive motor
13 pressurized gas supply port
22 furnace tube
23 heating portion
24 inlet
25 charging portion
26 outlet
27 discharging portion
28 pressurizing chamber
29a, 29b bearing
30 rotation driving portion
31 seal ring (fixed member side)
32 seal ring (rotating member side)
33 sliding portion
34 pressurized gas supply port
35 seal portion
42 drying furnace
43 heating portion
44 drive shaft
45 conveying vane
46 inlet
47 outlet
48 shaft seal portion
49 sliding portion
50 pressurizing chamber
51 drive motor
52 furnace wall
53 seal ring (fixed member side)
54 seal ring (rotating member side)
55 pressurized gas supply port

## Claims

1. A method for producing a sulfide solid electrolyte comprising:
supplying a sulfide solid electrolyte material to a heat treatment apparatus; and
heat-treating the sulfide solid electrolyte material,
wherein the heat treatment apparatus comprises: a heating portion configured to heat-treat the sulfide solid electrolyte material; a rotating member configured to convey the sulfide solid electrolyte material while heating the sulfide solid electrolyte material by the heating portion; a stationary fixed member that is disposed on an end portion side in an axial direction of the rotating member; and a pressurizing chamber configured to pressurize a boundary portion between the rotating member and the fixed member, and
the sulfide solid electrolyte material is heat-treated while controlling a pressure in the pressurizing chamber to a pressure higher than a pressure in the heating portion and an outside air pressure.

2. The method for producing a sulfide solid electrolyte according to claim 1, wherein the sulfide solid electrolyte material is obtained by mechanically milling or heating and melting a sulfide solid electrolyte raw material.

3. The method for producing a sulfide solid electrolyte according to claim 1 or 2, wherein an oxygen gas concentration in the pressurizing chamber is 10 ppm by volume or more.

4. The method for producing a sulfide solid electrolyte according to claim 1 or 2, wherein a heating temperature in the heating portion is 300°C or higher.

5. The method for producing a sulfide solid electrolyte according to claim 1 or 2, wherein a pressure difference between the pressure in the pressurizing chamber and each of the pressure in the heating portion and the outside air pressure is 0.1 kPa or more.

6. The method for producing a sulfide solid electrolyte according to claim 1 or 2, wherein the sulfide solid electrolyte material is continuously supplied and heat-treated.

7. An apparatus for producing a sulfide solid electrolyte, the apparatus comprising:
a heating portion configured to heat-treat a sulfide solid electrolyte material;
a rotating member configured to convey the sulfide solid electrolyte material while heating the sulfide solid electrolyte material by the heating portion;
a stationary fixed member that is disposed on an end portion side in an axial direction of the rotating member; and
a pressurizing chamber configured to pressurize a boundary portion between the rotating member and the fixed member.

8. The apparatus for producing a sulfide solid electrolyte according to claim 7, the apparatus further comprising an oxygen gas supply portion configured to supply an oxygen gas to the pressurizing chamber.
